# EUROPEAN PATENT SPECIFICATION

(11) **EP 2 257 795 B1**
(45) Date of publication and mention of the grant of the patent: **13.12.2017**
(21) Application number: 09723101.3
(22) Date of filing: 17.03.2009
(51) Int. Cl.: G01N 27/30, G01N 27/48

(54) **METHOD OF ELECTROCHEMICALLY DETECTING A CAPSAICINOID IN A SAMPLE**
METHODE ZUR ELEKTROCHEMISCHEN BESTIMMUNG VON CAPSAICIN UND DESSEN DERIVATE IN EINER PROBE
PROCÉDÉ DE DÉTECTION ÉLECTROCHIMIQUE D'UN CAPSAICINOÏDE DANS UN ÉCHANTILLON

(30) Priority: 18.03.2008 GB 0804981
(43) Date of publication of application: 08.12.2010
(73) Proprietor: Oxford University Innovation Limited, Botley Oxford OX2 0JB (GB)
(72) Inventor: COMPTON, Richard Guy, Oxford OX1 3QZ (GB); WILDGOOSE, Gregory George, Oxford OX1 3QZ (GB); KACHOOSANGI, Roohollah Torabi, Oxford OX1 3QZ (GB)
(74) Representative: HGF Limited
(86) International application number: PCT/GB2009/050256
(87) International publication number: WO 2009/115840

(56) References cited:
- WO-A-2007/107756
- V. SUPALKOVA ET AL.: "Study of Capsaicin Content in Various Parts of Pepper Fruit by Liquid Chromatography with Electrochemical Detection" ACTA. CHIM. SLOV., vol. 54, 26 March 2007 (2007-03-26), pages 55-59, XP002533351
- JIN G P ET AL: "Electrochemical behavior and adsorptive stripping voltammetric determination of quercetin at multi-wall carbon nanotubes-modified paraffin-impregnated graphite disk electrode" ELECTROCHIMICA ACTA, ELSEVIER SCIENCE PUBLISHERS, BARKING, GB, vol. 51, no. 21, 1 June 2006 (2006-06-01), pages 4341-4346, XP025168903 ISSN: 0013-4686 [retrieved on 2006-06-01]
- Z. WANG ET AL.: "Carbon nanotube-intercalated graphite electrodes for simultaneous determination of dopamine and serotonin in the presence of ascorbic acid" JOURNAL OF ELECTROANALYTICAL CHEMISTRY, vol. 540, 2003, pages 129-134, XP002533352

## Description

### Field of the Invention

This invention relates to the electrochemical detection of analytes, in particular capsaicinoids.

### Background to the Invention

Capsaicinoids are mainly responsible for the pungency ("hotness") of hot peppers. The capsaicinoid family includes compounds such as capsaicin (8-methyl-N-vanillyl-trans-6-nonenamide) and dihydrocapsaicin (8-methyl-N-vanillylnonanamide), which are responsible for about 90% of the pungency flavour in hot peppers. Less abundant capsaicinoids include norcapsaicin, nonivamide, homocapsaicin, homodihydrocapsaicin, nordihydrocapsaicin, nornordihydrocapsaicin and nornorcapsaicin. The concentration of capsaicinoids in hot peppers varies significantly, ranging from 0.003 to 0.01% w/w in dried less spicy peppers, to 0.01 to 0.3% w/w in mildly hot peppers, and from 0.3 to 1 % w/w in very hot peppers. Capsaicinoids are also known to have antioxidant, anti-tumoral, anti-mutagenic, antibacterial and anticarcinogenic properties. The compounds also exhibit protective effects against cholesterol, obesity and have been used as topical analgesics. Capsaicinoids are also used in defensive pepper sprays.

The level of heat of peppers and hot sauces has been measured by a classical method known as the Scoville organoleptic test (see W. Scoville, J Am Pharm. Assoc., 1, 453, (1912)). In this method, capsaicinoids are extracted in a solution of alcohol. The dissolved extract is then diluted in a solution of sugar water until the heat or pungency is no longer detectable to the tongues of a panel of five "specially trained volunteers". The level of dilution gives the Scoville unit, which is a measure of the pungency of a chilli pepper or a derivative, e.g. a hot sauce, thereof. For example, the Scoville unit for a Bell pepper is zero, because it contains no capsaicin and no heat is detectable even without dilution. In contrast, the Habanero pepper, one of the hottest peppers in the world, has a Scoville unit ranging from 200,000 to 300,000, indicating that its extract has to be diluted 200,000 to 300,000 times before pungency is undetectable. Pure capsaicin itself has a Scoville unit of 16 million. At present, the Scoville test is the industry standard for measuring a pepper's pungency. However, the Scoville test suffers from imprecision because of its rather subjective nature. In addition, training and assembling panels of tasters is inconvenient, costly and time-consuming.

Quantitative methods such as spectrophotometry and high-performance liquid chromatography (HPLC) have been used for the detection of capsaicinoids. The results of the HPLC method are reported in ASTA pungency units and are claimed to be more reproducible than the traditional Scoville method (see Tainter and Grenis, Spices and Seasoning, A Food Technology Handbook, WILEY-VCH, 2001; and Official Analytical Methods of the American Spice Trade Association, ASTA Inc, Englewood Cliffs, New Jersey, 1997). That said, it has been reported that the ASTA pungency unit can be converted to the Scoville unit by multiplying by a factor of 15. HPLC methods suffer from high cost and difficulty in sample preparation which makes them inherently unattractive for use in the detection of capsaicinoids. There remains a need for a simple and accurate technique for detecting and quantifying capsaicinoids.

### Summary of the Invention

The present invention is based at least in part on a discovery that capsaicinoids can be detected electrochemically. In particular, a sensitive electroanalytical method for the determination of capsaicin has been developed which involves the use of, for example, a multiwalled carbon nanotube (MWCNT) modified electrode and adsorptive stripping voltammetry (AdsSV).

Accordingly, the present invention provides a method of detecting a capsaicinoid in a sample, which comprises contacting the sample with working and counter electrodes in the presence of an electrolyte, and determining the electrochemical response of the working electrode to the sample.

The method of the invention may offer advantages such as precision and objectivity over the Scoville method, and may be facile and inexpensive compared to existing HPLC methods.

The method of the invention also enables the amount of capsaicin in a sample to be quantified.

### Brief Description of the Drawings

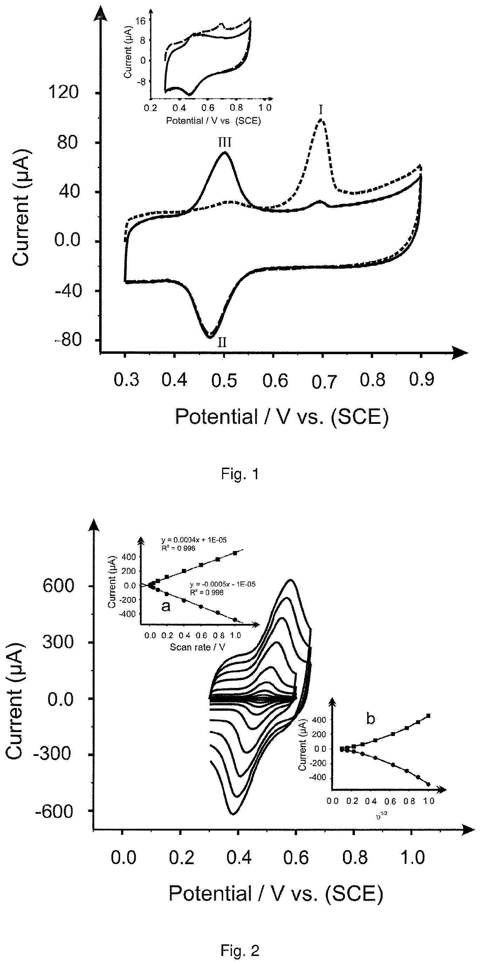

Figure 1 shows the first (dotted lines) and second (solid line) scan for the AdsSV of 50 µM capsaicin on MWCNT-modified basal plane pyrolytic graphite electrode (MWCNT-BPPGE) in a 0.05 M Britton Robinson buffer solution pH 1.0, after 1 minute accumulation at open circuit condition u = 100 mV.s⁻¹. Inset: The first (dashed lines) and second (solid line) scan for the AdsSV of 50µM capsaicin on bare-BPPGE in similar experimental conditions.
Figure 2 illustrates the scan rate dependence on the oxidation and reduction peak currents of second scans of cyclic voltammetry of 50 µM capsaicin on MWCNT-BPPGE in a 0.1 M Briton Robinson buffer pH 1.0. Inset a: Plot of peak current versus scan rate. Inset b: Plot of peak current versus square root of scan rate.

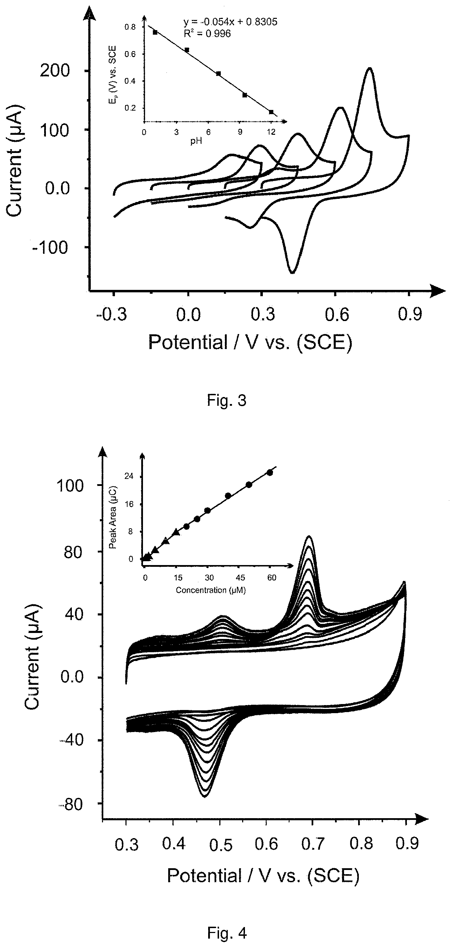

Figure 3 shows cyclic voltammograms recorded at 0.05 M Britton Robinson buffer solutions with different pH values (pH 1.0, 4.0, 7.0, 9.5 and 12) for 100 µM capsaicin on MWCNT-BPPGE, after 1 minute accumulation at open circuit condition at u = 100 mV.s⁻¹. Inset: Mid-peak potential of capsaicin oxidation peak versus pH.
Figure 4 shows cyclic voltammetric signals for the additions of capsaicin in a 0.05 M Briton Robinson buffer solution pH 1.0 using a MWCNT-BPPGE after 1 minute accumulation under stirring at open circuit condition. Inset: The corresponding calibration curve for additions of capsaicin.

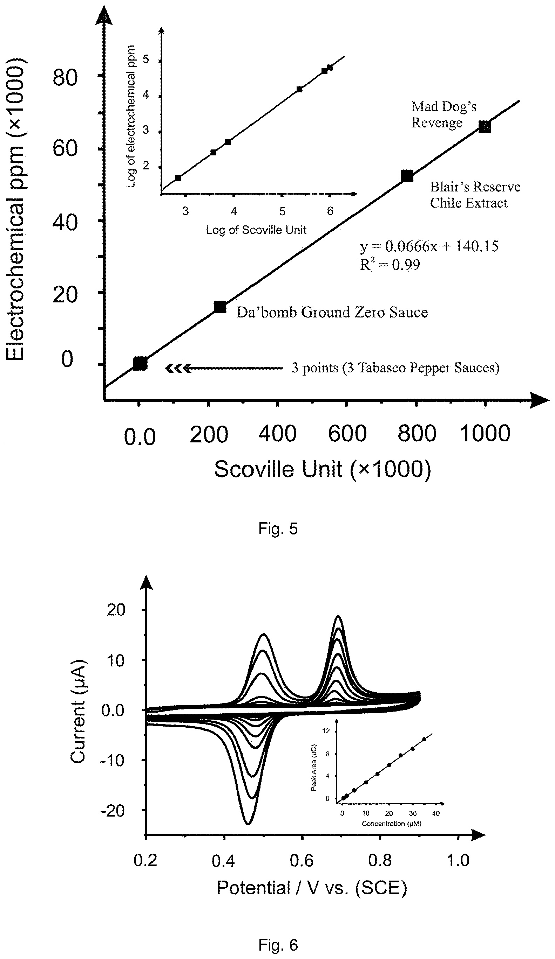

Figure 5 shows the measured value of capsaicin concentration in ppm (electrochemical ppm) versus the average of Scoville units in six hot pepper sauces. Inset: Log of the electrochemical ppm versus log of the average of Scoville units of 6 pepper sauces.
Figure 6 shows cyclic voltammetric signals for direct additions of 0.5, 1, 2, 5, 10, 15, 20, 25, 30 and 35 µM capsaicin on a multiwalled carbon nanotube screen printed electrode. Inset: The corresponding calibration curve for additions of capsaicin.

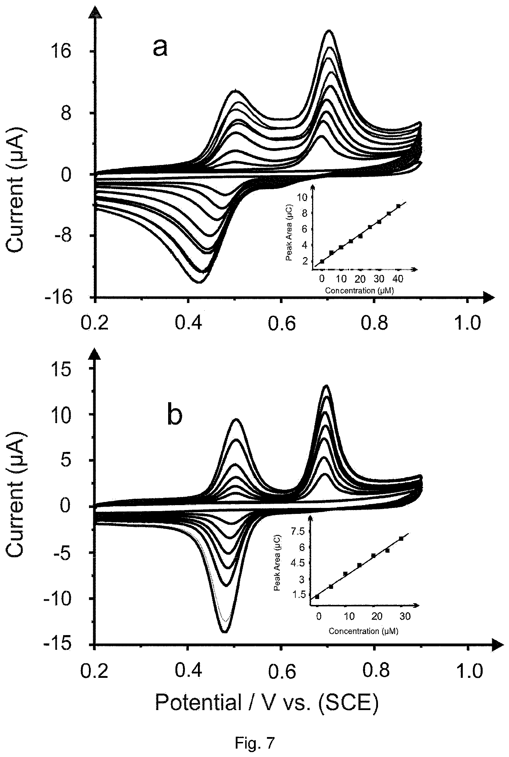

Figure 7 shows direct cyclic voltammetric signals for additions of capsaicin on diluted sauce samples of Tabasco Habanero hot sauce (a), and Mad Dog's Revenge (b), on multiwalled carbon nanotube screen printed electrode in 0.05 M Briton Robinson buffer solution pH 1. The insets depict the corresponding calibration curve for additions of capsaicin on sauce samples.

### Description of Various Embodiments

The capsaicinoid may be a naturally occuring or synthetic capsaicinoid. In one embodiment, the capsaicinoid is selected from capsaicin, dihydrocapsaicin, norcapsaicin, nonivamide, homocapsaicin, homodihydrocapsaicin, nordihydrocapsaicin, nornordihydrocapsaicin and nornorcapsaicin. In another embodiment, the capsaicinoid is capsaicin or dihydrocapsaicin. In a particular embodiment, the capsaicinoid is capsaicin.

Capsaicinoids typically comprise an o-alkoxyphenol group, the alkoxy group having, for example, from 1 to 6 carbon atoms. In many cases, capsaicinoids comprise an *o-*methoxyphenol group. Without wishing to be bound by theory, it is believed that the capsaicinoid undergoes an oxidative adsorption process at the working electrode, in which the o-alkoxyphenol group is oxidized and subsequently hydrolysed to form an *o-*benzoquinone group. The o-benzoquinone group subsequently undergoes a reversible redox reaction at the working electrode to form an o-hydroxyphenol group. These processes are illustrated below for capsaicin:

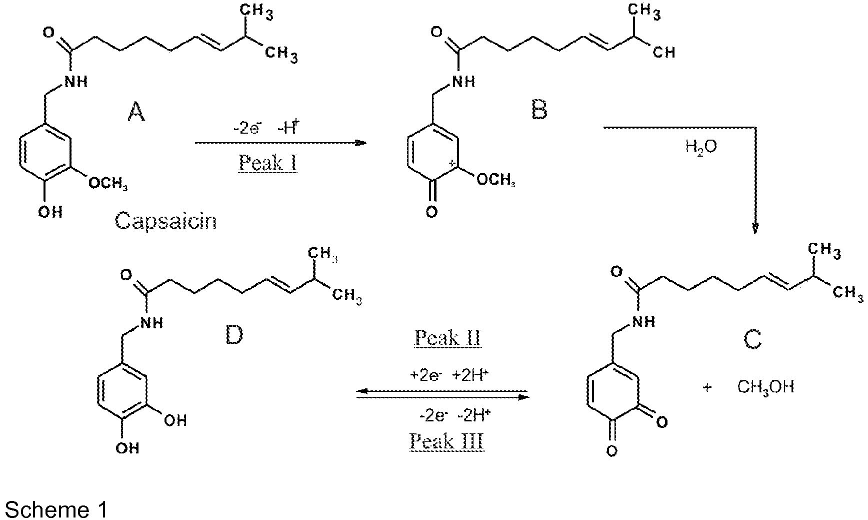

The capsaicinoid may be detected by determining the electrochemical response of the working electrode to the oxidative adsorption of the capsacinoid and/or the subsequent redox reaction of the resulting o-benzoquinone group. By way of illustration, peak I of Figure 1 is attributable to the oxidative adsorption process, while peaks II and III are attributable to the redox reaction of the o-benzoquinone group.

The sample will usually be in liquid form, e.g. in the form of a solution in which, for example, a food product or pharmaceutical product is dissolved. Of mention are samples which are in aqueous form.

The compound may be detected using an electrochemical sensor containing a working electrode with which the compound is contacted. Typically, electrochemical sensors are based upon the configuration of an electrochemical cell, comprising a working electrode, a counter electrode and an electrolyte, for example. The sensor may further comprise a reference electrode. Suitable sensor designs are well known in the art.

The working electrode may be any suitable electrode known in the art, for example a metallic or carbon electrode. Examples of metallic electrodes include gold, silver and platinum electrodes. Examples of carbon electrodes include an edge plane pyrolytic graphite electrode, a basal plane pyrolytic graphite electrode, a glassy carbon electrode, a boron doped diamond electrode, a highly ordered pyrolytic graphite electrode, carbon powder and carbon nanotubes. The working electrode may be a microelectrode or a macroelectrode. The counter electrode may be any suitable electrode, for example, a platinum or graphite electrode.

In one embodiment, the working electrode comprises a substrate, e.g. a carbon substrate such as graphite, comprising one or more MWCNTs. An exemplary substrate is basal plane pyrolytic graphite, although other suitable substrates will be apparent to those skilled in the art. Various types of MWCNT are known in the art, examples including bamboo, hollow tube and herringbone MWCNTs. In a particular embodiment, the MWCNT is a bamboo MWCNT. MWCNTs typically have an outer diameter of between 5 and 100 nm, e.g between 5 and 50 nm. The length of a MWCNT is often between 1 to 50 µm, e.g. between 5 and 20 µm. Methods for producing such electrodes are known in the art. For example, a working electrode for use in the invention may be manufactured by first dispersing an amount of MWCNTs in acetone, placing the resulting suspension into an ultrasonic bath and then pipetting this composition onto a substrate, for example graphite. Subsequent volatization produces a presumed random distribution of the MWCNTs on the surface of the substrate.

In a further embodiment, the working electrode comprises a substrate comprising one or more carbon nanotubes, wherein the substrate is a binder such as epoxy (a "carbon-epoxy electrode"), mineral oil (a "carbon paste electrode") or a room temperature ionic liquid (a RTIL-carbon paste electrode). Such electrodes are known as "composite electrodes" and may additionally comprise a filler, such as graphite.

In an embodiment, the working electrode is obtained by screen printing. In a particular embodiment, the carbon nanotubes can be ink-jet printed or pad-printed onto the substrate.

Detection may take place in the presence of an electrolyte, which is typically present in solution. A buffer solution comprising an electrolyte may be used, an example being a Britton-Robinson buffer solution, which contains approximately 0.04 M of each of acetic, phosphoric and boric acids, adjusted to the required pH using aqueous sodium hydroxide. Other electrolytes may be used in the invention and will be apparent to the skilled person.

The electrochemical response of the working electrode may be determined using any suitable technique known in the art. This typically involves applying a potential across the working and counter electrodes, and determining the response of the working electrode to the sample. A potential may be applied across the electrodes using a potentiostat, and the response of the cell to the sample determined.

Various electrochemical techniques, for example voltammetry (e.g. cyclic voltammetry) and amperometry, are encompassed by the present invention. For determination of the voltammetric response, the applied potential is varied relative to a reference electrode; in this way, a cyclic voltammogram may be obtained. Alternatively, the amperometric response of the cell can be determined by applying a fixed potential across the electrodes, optionally controlled relative to a reference electrode. The reference electrode may be, for example, a saturated calomel electrode (SCE) or a silver electrode.

In one embodiment, the current is measured using linear sweep or cyclic voltammetry. In another embodiment, said current is measured using square wave voltammetry. In an alternative embodiment, the current is measured using a pulsed voltammetry technique, in particular differential pulse voltammetry. In a particular embodiment, the response of the working electrode is determined using adsorptive stripping voltammetry (AdsSV).

The following Examples illustrate the invention.

### Experimental

### Chemicals and Apparatus

All chemicals were of analytical grade and were used as received without any further purification. Capsaicin was purchased from Sigma. All solutions were prepared with deionized water of resistivity not less than 18.2 MΩ cm at 298 K (Vivendi water systems). Bamboo-like multiwalled carbon nanotubes (b-MWCNTs, <95%, diameter 30-15 nm, length 5-20 µm) were purchased from NanoLab. The following commercially available chilli sauces were purchased: Tabasco green pepper sauce, Tabasco pepper sauce and Tabasco Habanero pepper sauce (all bought from Mcllhenny Company); "DA'BOMB Ground Zero" sauce (bought from Original Juan Specialty Food); "Blair's Reserve 2AM" pepper extract (bought from Gardner Resources, Inc.); and "Mad Dog's Revenge" extract (bought from Ashley Food Company, Inc.).

Cyclic voltammetric measurements were carried out using a µ-Autolab II (ECO-Chemie, The Netherlands) potentiostat. Unless stated otherwise the scan rate for cyclic voltammetric measurements was 100 mVs⁻¹ and step potential was 1 mVs⁻¹. All measurements were conducted using a three-electrode configuration. A basal plane pyrolytic graphite electrode (BPPGE) (4.9 mm diameter, Le Carbone, Ltd.) or multiwalled carbon nanotube modified basal plane pyrolytic graphite electrode (MWCNT-BPPGE) was used as the working electrode. The cell assembly was completed using a platinum wire (Goodfellow, 99.99%) as the counter electrode and a saturated calomel electrode (SCE, Radiometer) as the reference electrode. Alternatively this cell arrangement was replaced by a multiwalled carbon nanotube modified screen printed electrode (MWCNT-SPE) (IJ Cambria Scientific Ltd.) with a built-in carbon counter electrode and an Ag/AgCl reference electrode.

The BPPGE was prepared by renewing the electrode surface with cellotape. This procedure involves polishing the BPPGE surface on carborundum paper (P100 grade) and then pressing cellotape on to the cleaned BPPG surface before removing with attached graphite layers. This was repeated several times and the electrode was then cleaned in acetone to remove any residual adhesive.

The MWCNT-BPPGE was prepared as follows: bamboo-like multiwalled carbon nanotubes were first dispersed in acetone (1 mg in 1 mL). This was placed into an ultrasonic bath for 10 minutes, after which a 20 µL aliquot was cast onto the BPPGE surface and the solvent allowed to evaporate.

### Analytical Procedures

For voltammetric characterization experiments using the MWCNT-BPPGE, the electrode was placed in a solution containing capsaicin dissolved in a mixture of 40% ethanol and 60% 0.05 M Briton Robinson buffer pH 1.0 before commencing the scan. For open circuit accumulation in AdSV, the electrode was left in the solution containing capsaicin for 1 minute (unless stated) under stirring condition before being rinsed in pure water and transferred to the blank Briton Robinson buffer solution pH 1.0 for voltammetric analysis.

For cyclic voltammetric determination of capsaicin using MWCNT-SPE, a 50 µL droplet of the test solution containing desired concentration of capsaicin was placed onto the MWCNT-SPE ensuring that all three electrodes were in contact with the solution and the voltammetry was recorded directly without any accumulation step.

### Example 1: Comparison of bare-BPPGE with MWCNT-BPPGE

The cyclic voltammetric signal and electroactivity of capsaicin at a bare BPPGE and MWCNT-BPPGE were first explored.

Figure 1 depicts the responses for two successive scans for the AdsSV oxidation of 50 µM capsaicin on MWCNT-BPPGE in a 0.05 M Britton Robinson buffer solution pH 1.0, recorded at a scan rate of 100 mVs⁻¹ after 1 minute accumulation with stirring at open circuit condition.

The inset in Figure 1 shows two successive cyclic voltammetric scans of 50 µM capsaicin on a BPPGE which resulted in a small and broad oxidation peak at potential of ca. 0.70 V (vs. SCE) and a small reduction peak at potential of 0.48 V. The dashed line in Figure 1 shows the first scan cyclic voltammogram for 50 µM capsaicin on a MWCNT-BPPGE which shows a sharp and well-defined oxidation peak at 0.70 V and a corresponding reduction peak at 0.48 V. The solid line shows the second scan cyclic voltammogram for the concentration of 50 µM capsaicin on a MWCNT-BPPGE which shows a sharp and well-defined oxidation peak at 0.50 V and a corresponding reduction peak at 0.48 V. As can be obviously seen, there is a large difference between the magnitudes of the capsaicin voltammetric signals on the MWCNT-BPPGE in comparison to a bare BPPGE. The oxidation and reduction peak heights are increased significantly when the MWCNT-BPPGE is used instead of bare BPPGE which is most probably an indication of the larger surface area of the MWCNT-BPPGE in comparison to bare BPPGE.

### Effect of voltage scan rate

The effect of scan rate on the oxidation and reduction peak currents of second scans of cyclic voltammetric signals of capsaicin on MWCNT-BPPGE in 0.1 M Briton Robinson buffer pH 1.0 was studied. The electrode was immersed in a 40% ethanol and 60% Briton Robinson buffer solution pH 1.0 containing 50 µM capsaicin with stirring for three minutes at open circuit potential and then transferred to a blank solution of 0.05 M Briton Robinson buffer with pH 1. Then the voltammograms were recorded without any further accumulation steps.

Figure 2 depicts the cyclic voltammetric signals of capsaicin in the range of 0.01 to 1 V.s⁻¹. With increasing scan rate from 0.01 to 1 V.s⁻¹, the oxidative and reductive peak current of capsaicin shows a linear relationship (inset (a) of Figure 2) which indicates the adsorption of capsaicin onto the surface of MWCNT. The non-linear relationship between the oxidative and reductive peak currents of capsaicin and the square root of scan rate from 0.01 to 1 Vs⁻¹ (inset (b) of Figure 2) further confirms that redox process in the solution is under the control of adsorption and not diffusion.

### Effect of pH

In order to find the optimum pH value for detection of capsaicin and also confirm the equality in the number of protons and electrons involved in the voltammetric oxidation of capsaicin, the effect of pH was explored. The effect of pH on the adsorptive stripping voltammetric signals of capsaicin on MWCNT-BPPGE was explored in the range of pH 1.0 to 12 at the determination step using 0.05 M Britton Robinson buffer.

The MWCNT-BPPGE was first placed in a mixture of 60% 0.05 M Britton Robinson buffer solution pH 1.0 and 40% ethanol containing 100 µM capsaicin, and allowed to accumulate at open circuit potential under stirring for three minutes. Next the MWCNT-BPPGE was removed from the accumulation solution, rinsed with distilled water and immersed in a fresh Britton Robinson buffer solution in which capsaicin was absent at the desired pH and the cyclic voltammetric response recorded. The same procedure was used for the study of each pH from 1.0 to 12. The same MWCNT-BPPGE used for all of pH experiments to allow a direct comparison of the voltammetric responses.

Figure 3 shows the cyclic voltammograms recorded different pH values for 100 µM capsaicin. As can be observed in the inset of Figure 3, the mid-peak potential of capsaicin oxidation peak varies linearly with pH and shifted to more negative potentials by 54 mV per unit increase in pH (E_{mid} = -0.054pH + 0.8305, R²=0.996) which is close to the ideal potential shift of -59 mV per unit increase in pH predicted by the Nernst equation. This suggests that the numbers of electrons and protons transferred in the redox reaction of capsaicin in the first scan are equal and that the number of electron and protons in the overall electrochemical and chemical step of the capsaicin oxidation is two. It is also suggests that the number of electrons and protons in the second scan is two.

### Example 2: Adsorptive stripping voltammetry of capsaicin on MWCNT-BPPGE

In order to assess the analytical performance of MWCNT-BPPGE, adsorptive stripping voltammetric determination of capsaicin in open circuit condition in standard samples was attempted. The MWCNT-BPPGE was immersed in a 0.05 M Briton Robinson buffer solution pH 1.0 containing increasing concentrations of capsaicin for 1 minute at open circuit potential. The electrode was then rinsed and immersed in the blank solution of 0.05 M Briton Robinson buffer pH 1.0 for the voltammetric detection step.

Figure 4 depicts the cyclic voltammetric signals for the additions of capsaicin in a 0.05 M Briton Robinson buffer solution pH 1.0 using a MWCNT-BPPGE after 1 minute accumulation. The curve of peak area versus added concentration of capsaicin ehibited two linear ranges. The first range of the calibration plot is linear in the concentration ranges from 0.5 µM to 15 µM (I/C=5.31×10⁻⁷ [capsaicin](µM)-2.52×10⁻⁷ C, N=6) and the second range is linear in the concentration range from 15 µM to 60 µM (I/C=3.95×10⁻⁷ [capsaicin] (µM)+1.94×10⁻⁶ C, N=7) as shown in the inset of Figure 4. Using the first range of this calibration plot, a detection limit of 0.31 µM is obtained (based on 3σ).

### Example 3: Analysis of capsaicinoids in "real" samples

The concentration of capsaicin in ppm units ("electrochemical ppm") was determined in a variety of hot pepper sauces.

Capsaicin was extracted from sauces prior to the electrochemical analysis. An aliquot 1 g of each sauce was placed into a 50 mL volumetric flask and brought up to volume with ethanol. The flask was then placed in an ultrasonic bath and sonicated for 10 minutes, then stirred for 2 hours using a magnetic stirrer and centrifuged at 10,000 rpm for 20 minutes to remove any solids. The supernatant liquid was then used for electrochemical analysis.

Prior to analysis, the extracts from each sauce sample was diluted with a 0.05 M Britton Robinson buffer solutions pH 1.0 until the voltammetric response fell within the linear detection range (the dilution factors used were 40, 100, 200, 4500, 15000 and 20000 for Tabasco Green Pepper sauce, Tabasco Pepper Sauce, Tabasco Habanero Sauce, Da'bomb Ground Zero sauce, Blair's Reserve 2AM and Mad Dog's Revenge respectively). The MWCNT-BPPGE was then placed in the diluted sample solution and allowed to accumulate at open circuit potential under stirring for 1 minute and its adsorptive stripping voltammogram was recorded at scan rate of 100 mVs⁻¹.

After accumulation standard additions of capsaicin on the diluted samples of sauces was performed. The concentration of capsaicin determined using an AdsSV method is given in Table 1:

| **Sample** | **Scoville Unit** | **Measured conc. (mM)** | **Measured conc. (electrochem. ppm)** | **Measured conc. (ppm) converted to Scoville Unit** |
|---|---|---|---|---|
| Tabasco Green Pepper | 600-800 | 0.165 | 50.5 | 757 |
| Tabasco Pepper | 2,500-5,000 | 0.872 | 266.4 | 3,995 |
| Tabasco Habanero | 7,000-8,000 | 1.7 | 520 | 7,800 |
| DA'BOMB Ground Zero | 234,000 | 52 | 16,000 | 238,700 |
| Blair's 2AM Reserve | 600,000 - 900,000 | 172 | 52,530 | 788,000 |
| Mad Dog's Revenge | 1,000,0000 | 216 | 66,110 | 991,700 |

The calculated concentration in µM has been converted to ppm and also to Scoville heat unit assuming that 1 ppm is approximately equal to 15 Scoville unit.

Figure 5 shows the measured value in ppm namely electrochemical ppm versus the *average* of Scoville units which shows an excellent correlation with Scoville heat unit assuming 15 Scoville units is equal to 1 ppm of capsaicin. In order to clarify this further, the graph of log of electrochemical ppm versus log of the average of Scoville units is also shown in the inset of Figure 5.

### Example 4: Utilisation of multiwalled carbon nanotube screen printed electrodes (MWCNT-SPE) for detection of capsaicin in standard and real samples

Cyclic voltammetric additions of capsaicin were made on the surface of a carboxylated multiwalled carbon nanotube screen printed electrode.

An aliquot of 50 µL of standard solution with increasing concentrations of capsaicin were dropped on the surface of electrode and the cyclic voltammetry of capsaicin was recorded directly. The electrode surface was rinsed with pure water between additions of different concentrations of capsaicin.

Figure 6 depicts the cyclic voltammetric signals for direct additions of 0.5, 1, 2, 5, 10, 15, 20, 25, 30 and 35 µM capsaicin in 0.05 M Briton Robinson buffer pH 1.0 on a multiwalled carbon nanotube screen printed electrode.

The plot of peak area versus added concentration of capsaicin (inset of Figure 10) exhibited a linear behaviour in the concentration ranges between 0.5 µM and 35 µM (I/C=3.07×10⁻⁷ [Capsaicin](µM)-1.52×10⁻⁷ C, N=10, R²=0.99) and a detection limit of 0.45 µM is obtained (based on 3σ) using this calibration plot.

The addition of a standard solution of capsaicin on the diluted sauce samples of Tabasco Habanero and Mad Dog's Revenge was performed. The results are depicted in Figures 7a and 7b respectively. The corresponding calibration plots are shown in the insets. The corresponding electrochemical ppm was measured using these calibration curves and after their conversion to the Scoville unit (assuming that 1 ppm is approximately 15 Scoville unit), values of 8300 and 952,000 were obtained for Tabasco Habanero and Mad Dog's Revenge sauces respectively. These values are in good agreement with the reported Scoville values of 7000 to 8000 and 1,000,000 respectively.

## Claims

1. A method of detecting a capsaicinoid in a sample, which comprises contacting the sample with working and counter electrodes in the presence of an electrolyte, and determining the electrochemical response of the working electrode to the sample, wherein the working electrode comprises a substrate comprising one or more multiwalled carbon nanotubes.

2. A method according to claim 1, wherein the capsaicinoid is selected from capsaicin, dihydrocapsaicin, norcapsaicin, nonivamide, homocapsaicin, homodihydrocapsaicin, nordihydrocapsaicin, nornordihydrocapsaicin and nornorcapsaicin.

3. A method according to claim 2, wherein the capsaicinoid is capsaicin.

4. A method according to any preceding claim, wherein the capsaicinoid comprises an o-alkoxyphenol group.

5. A method according to claim 4, wherein the o-alkoxyphenol group is an *o-*methoxyphenol group.

6. A method according to claim 4 or claim 5, wherein the o-alkoxyphenol group undergoes oxidation at the working electrode to form an o-benzoquinone group.

7. A method according to claim 6, wherein the response of the working electrode to said oxidation is determined.

8. A method according to claim 6 or claim 7, wherein the o-benzoquinone group undergoes a reversible redox reaction to form an o-hydroxyphenol group.

9. A method according to claim 8, wherein the response of the working electrode to said redox reaction is determined.

10. A method according to claim 1, wherein the substrate comprises basal plane pyrolytic graphite.

11. A method according to any preceding claim, wherein the voltammetric response of the working electrode is determined.

12. A method according to claim 11, wherein the response of the working electrode is determined using adsorptive stripping voltammetry.

13. Use of an electrochemical sensor for the electrochemical detection of a capsaicinoid, wherein the sensor comprises a counter electrode and a working electrode as defined in claim 1.

## Patentansprüche

1. Verfahren zum Nachweisen eines Capsaicinoids in einer Probe, welches das In-Kontakt-bringen der Probe mit Arbeits- und Gegenelektroden in Gegenwart eines Elektrolyts und das Bestimmen der elektrochemischen Reaktion der Arbeitselektrode gegenüber der Probe beinhaltet, wobei die Arbeitselektrode ein Substrat beinhaltet, das eine oder mehrere mehrwandige Kohlenstoff-Nanoröhren beinhaltet.

2. Verfahren gemäß Anspruch 1, wobei das Capsaicinoid aus Capsaicin, Dihydrocapsaicin, Norcapsaicin, Nonivamid, Homocapsaicin, Homodihydrocapsaicin, Nordihydrocapsaicin, Nornordihydrocapsaicin und Nornorcapsaicin ausgewählt wird.

3. Verfahren gemäß Anspruch 2, wobei das Capsaicinoid Capsaicin ist.

4. Verfahren gemäß einem vorhergehenden Anspruch, wobei das Capsaicinoid eine *o*-Alkoxyphenol-Gruppe beinhaltet.

5. Verfahren gemäß Anspruch 4, wobei die *o*-Alkoxyphenol-Gruppe eine *o*-Methoxyphenol-Gruppe ist.

6. Verfahren gemäß Anspruch 4 oder Anspruch 5, wobei die *o*-Alkoxyphenol-Gruppe Oxidation an der Arbeitselektrode erfährt, um eine *o*-Benzochinon-Gruppe zu bilden.

7. Verfahren gemäß Anspruch 6, wobei die Reaktion der Arbeitselektrode gegenüber der Oxidation bestimmt wird.

8. Verfahren gemäß Anspruch 6 oder Anspruch 7, wobei die *o*-Benzochinon-Gruppe eine reversible Redoxreaktion erfährt, um eine *o*-Hydroxyphenol-Gruppe zu bilden.

9. Verfahren gemäß Anspruch 8, wobei die Reaktion der Arbeitselektrode gegenüber der Redoxreaktion bestimmt wird.

10. Verfahren gemäß Anspruch 1, wobei das Substrat basalen planen pyrolythischen Graphit beinhaltet.

11. Verfahren gemäß einem vorhergehenden Anspruch, wobei die voltammetrische Reaktion der Arbeitselektrode bestimmt wird.

12. Verfahren gemäß Anspruch 11, wobei die voltammetrische Reaktion der Arbeitselektrode unter Verwendung adsorptiver Stripping-Voltammetrie bestimmt wird.

13. Verwendung eines elektrochemischen Sensors für den elektrochemischen Nachweis eines Capsaicinoids, wobei der Sensor eine Gegenelektrode und eine Arbeitselektrode gemäß Anspruch 1 beinhaltet.

## Revendications

1. Procédé de détection d'un capsaicinoïde dans un échantillon, qui comprend la mise en contact de l'échantillon avec une électrode de travail et une contre-électrode en présence d'un électrolyte, et la détermination de la réponse électrochimique de l'électrode de travail à l'échantillon, ladite électrode de travail comprenant un substrat comprenant un ou plusieurs nanotubes de carbone à multiples parois.

2. Procédé selon la revendication 1, ledit capsaicinoïde étant choisi parmi la capsaïcine, la dihydrocapsaïcine, la norcapsaïcine, le nonivamide, l'homocapsaïcine, l'homodihydrocapsaïcine, la nordihydrocapsaïcine, la nornordihydrocapsaïcine et la nornorcapsaïcine.

3. Procédé selon la revendication 2, ledit capsaicinoïde étant la capsaïcine.

4. Procédé selon l'une quelconque des revendications précédentes, ledit capsaicinoïde comprenant un groupe *o*-alcoxyphénol.

5. Procédé selon la revendication 4, ledit groupe *o*-alcoxyphénol étant un groupe *o*-méthoxyphénol.

6. Procédé selon la revendication 4 ou 5, ledit groupe *o*-alcoxyphénol subissant une oxydation au niveau de l'électrode de travail pour former un groupe o-benzoquinone.

7. Procédé selon la revendication 6, ladite réponse de l'électrode de travail à ladite oxydation étant déterminée.

8. Procédé selon la revendication 6 ou 7, ledit groupe o-benzoquinone subissant une réaction d'oxydoréduction réversible pour former un groupe *o*-hydroxyphénol.

9. Procédé selon la revendication 8, ladite réponse de l'électrode de travail à ladite réaction d'oxydoréduction étant déterminée.

10. Procédé selon la revendication 1, ledit substrat comprenant du graphite pyrolytique de plan basal.

11. Procédé selon l'une quelconque des revendications précédentes, ladite réponse voltampérométrique de l'électrode de travail étant déterminée.

12. Procédé selon la revendication 11, ladite réponse de l'électrode de travail étant déterminée au moyen d'une voltampérométrie inverse d'adsorption.

13. Utilisation d'un capteur électrochimique destiné à la détection électrochimique d'un capsaicinoïde, ledit capteur comprenant une contre-électrode et une électrode de travail telles que définies dans la revendication 1.
